# EUROPEAN PATENT SPECIFICATION

(11) **EP 4 102 178 B1**
(45) Date of publication and mention of the grant of the patent: **19.03.2025**
(21) Application number: 22178432.5
(22) Date of filing: 10.06.2022
(51) Int. Cl.: G01B 11/275

(54) **VEHICLE SERVICE SYSTEM AND OPERATING METHOD THEREOF**
FAHRZEUGSERVICESYSTEM UND BETRIEBSVERFAHREN DAFÜR
SYSTÈME DE SERVICE DE VÉHICULE ET SON PROCÉDÉ DE FONCTIONNEMENT

(30) Priority: 11.06.2021 IT 202100015296
(43) Date of publication of application: 14.12.2022
(73) Proprietor: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(56) References cited:
- EP-A1- 3 364 149
- CN-U- 210 322 327
- US-A- 6 134 792
- US-A1- 2010 165 332
- US-A1- 2011 316 979

## Description

### CROSS-REFERENCE TO RELATED APPLICATIONS

This Patent Application claims priority from Italian Patent Application No. 102021000015296 filed on June 11, 2021.

### TECHNICAL FIELD

The present invention relates to a vehicle service system and the operating method thereof.

### PRIOR ART

As is known, some vehicle service systems provide for the implementation of ADAS (acronym for Advanced Driver Assistance Systems) calibration operations/functions and/or operations/functions for determining/measuring the alignment of the wheels of a vehicle.

Such vehicle service systems generally comprise target devices which are mounted on the wheels of the vehicle, and a display system capturing images of the targets of the target devices. The images of the targets are then processed by processing systems to obtain vehicle information which depends on the type of service required, i.e., ADAS calibration and/or alignment determination.

Some types of target devices of the above-mentioned vehicle service systems comprise a mechanical anchoring member, which is mounted manually in a stable but easily removable manner on the vehicle wheel, a rectangular plate-like target body having the image of the target on one face, and a rod which extends from one of the longest sides of the plate-like target body and is coupled in a freely rotatable manner to the mechanical anchoring member so that it can be rotated around a horizontal axis normally coaxial with the axis of rotation of the wheel, i.e., of its hub.

The ADAS calibration or wheel alignment determination procedures implemented by the vehicle service systems described above comprise an initial step of angularly calibrating the target devices, which involves adjusting the angular position of each plate-like target body so as to arrange it in a vertical plane.

A solution currently used for the correct angular positioning of the target bodies during the calibration step involves the use of manual measuring instruments, such as for example spirit levels, which in use are arranged resting on the plate-like body to specifically detect its vertical position.

This solution, in addition to requiring a certain time to be implemented, has the technical problem of being affected by inaccuracies in case of incorrect positioning of the instrument on the target body and/or in case of

incorrect detection of the position of the indicator bubble by the operator.

These inaccuracies in turn introduce errors to the results provided and/or to the functions implemented by the service system, thereby causing, for example, incorrect calibration of the cameras of the vehicle's ADAS system and/or incorrect determination of the vehicle's wheel alignment.

Solutions disclosed in EP 3 36 414 9 A1 and CN 210 322 327 U are also known.

### DESCRIPTION OF THE INVENTION

The object of the present invention is therefore to provide a target device and a vehicle service system which overcomes the above-mentioned technical problems.

In accordance with this object according to the present invention, a vehicle service system and the operating method thereof are provided as defined in the related independent claims, and preferably, but not necessarily, in any one of the claims dependent thereon.

The claims describe preferred embodiments of the present invention forming an integral part of the present specification.

### BRIEF DESCRIPTION OF THE DRAWINGS

The present invention will now be described with reference to the accompanying drawings, which illustrate a non-limiting embodiment thereof, wherein:
- Figure 1 is a schematic perspective view, with parts on an enlarged scale, of a vehicle service system provided according to the present invention,
- Figure 2 is a schematic side elevation view, with parts on an enlarged scale, of a vehicle service system provided according to the present invention,
- Figure 3 is an exploded view of a target device of the vehicle service system provided according to the present invention,
- Figure 4 is a schematic perspective view of the height measuring apparatus of the vehicle service system provided according to the present invention, used for measuring the height of a wheel arch of the vehicle,
- Figure 5 schematically shows a height measuring apparatus of the vehicle service system provided according to the present invention,
- Figures 6 to 9 are further schematic perspective views showing operating steps for the operation of the vehicle service system, provided according to the present invention, during the angular calibration of the target devices,
- Figures 10 to 13 are further schematic perspective views showing steps of the operation of the vehicle service system provided according to the present invention, during the measurement of the heights of the wheel arches of the vehicle, whereas
- Figures 14 to 16 are further schematic views showing the angular rotation of the plate-like target body towards a first angular calibration position and a second angular calibration position.

### PREFERRED EMBODIMENTS OF THE INVENTION

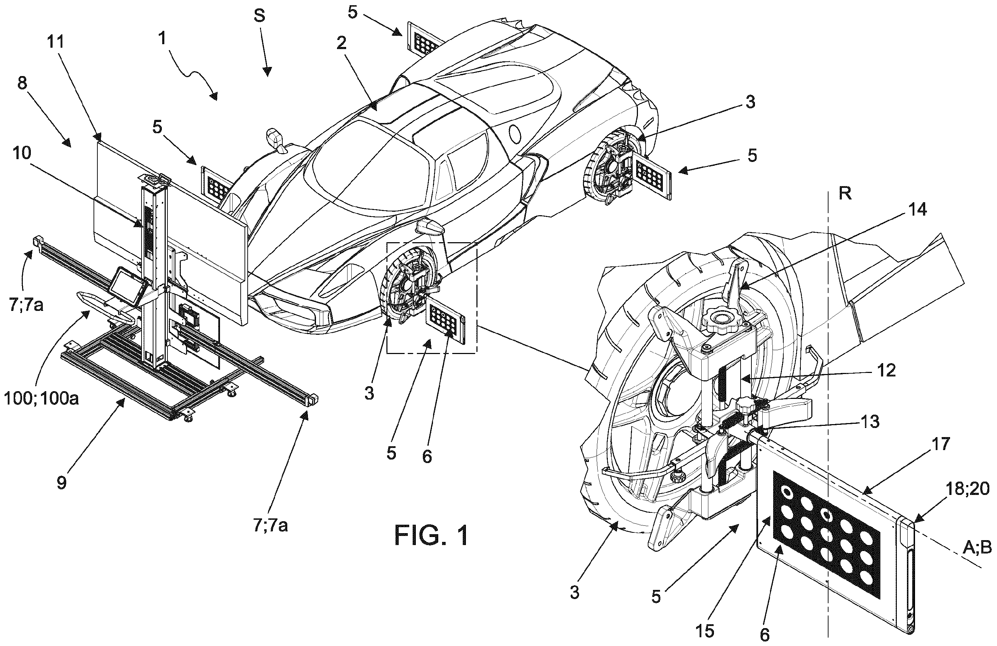

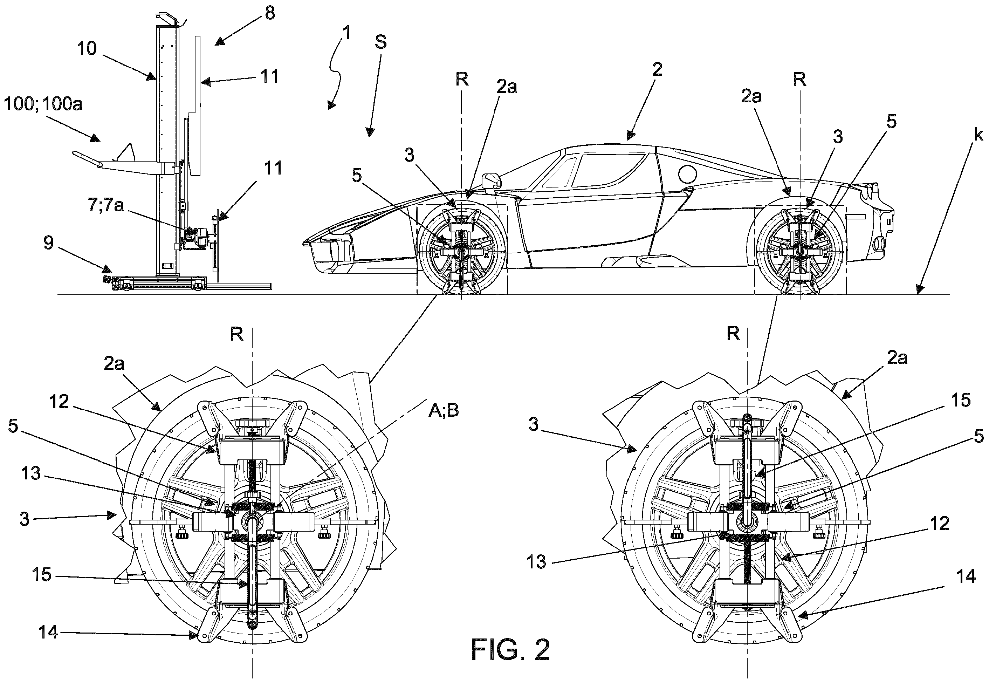

With reference to Figures 1 and 2, number 1 indicates, as a whole, a vehicle service system.

According to the present invention, the vehicle service system 1 can be configured so as to implement/carry out an ADAS service or calibration method for a vehicle 2 arranged on a support surface K of a service station or area S.

According to the present invention, the vehicle service system 1 can also be configured so as to implement/carry out, in addition to or as an alternative to the ADAS calibration method, a service or a method for determining the alignment of the wheels 3 of the vehicle 2.

It should be understood that in the following description the term vehicle 2 refers to a motor vehicle, with two or more wheels, preferably four, such as for example a motor vehicle or motorcycle.

It should also be noted that during the implementation of the ADAS calibration method, the vehicle service system 1 performs an ADAS calibration of the electronic sensor devices, referred to in the following as ADAS sensors (not shown) included in an Advanced Driver Assistance System (ADAS) (not shown) of the vehicle 2. It should also be understood that ADAS sensors may comprise any sensor commonly present in the advanced driver assistance system of a vehicle 2. For example, ADAS sensors may include a selection of the following: a radar sensor, an optical sensor, a camera, a LIDAR sensor, an ultrasonic sensor, an infrared (IR) sensor, or any similar sensor. It should also be understood that, according to the following description, the "calibration" (and/or re-calibration) function performed by the calibration method is intended so as to also include, in addition to and/or as an alternative to the "calibration", an "alignment" (or re-alignment) of an ADAS sensor.

As regards the implementation of the method for determining the alignment, the vehicle service system 1 can determine the alignment on the basis of the determination or measurement at least of the heeling angles that characterize the wheels 3 of the vehicle 2. The characteristic heeling angles used by the method for determining the alignment of the wheels 3 may comprise one or more of the following characteristic angles: the angle of incidence, the camber angle, and the toe angle of the wheels 3.

With reference to Figures 1 and 2, the vehicle service system 1 comprises one or more target devices 5. The target devices 5 are structured to be mounted on (and disassembled from) respective wheels 3 of the vehicle 2 and are provided with respective graphic targets 6.

The vehicle service system 1 further comprises an image acquisition unit or system 7, which is designed to acquire target images containing the graphic targets 6 of the target devices 5 mounted on the wheels 3.

The vehicle service system 1 also comprises a processing unit or system 100, which is configured to process the target images to determine preliminary information associated with the ADAS calibration method and/or with the method for determining the alignment.

The preliminary information may preferably comprise, for example, the characteristic heeling angles when implementing the method for determining the alignment, and/or the position of the vehicle 2 relative to a predetermined reference system when implementing the ADAS calibration method.

With reference to the exemplary embodiment shown in Figures 1 and 2, the vehicle service system 1 comprises a vehicle service apparatus 8. In the example shown in Figures 1 and 2, the vehicle service apparatus 8 is arranged in front of the vehicle 2 and can be mobile/movable (manually or by means of motorized systems) on the support surface K relative to the vehicle 2. The vehicle service apparatus 8 may comprise, for example: a base 9 arranged on the support surface K preferably by means of wheels, and at least one support frame or structure 10 which is coupled/connected to the base 9 and extends above it.

With reference to the exemplary embodiment shown in Figures 1 and 2, the image acquisition system 7 is preferably included in the vehicle service apparatus 8 and may be provided with cameras 7a supported by the support structure 10.

In the example shown in Figures 1, 2 and 4, the image acquisition system 7 comprises a series of cameras 7a, for example two cameras, which are arranged on the opposite ends of a horizontal bar of the support structure 10, in positions mutually laterally opposite to the support structure 10, so that they can observe and capture the target images of the target devices 5 mounted on the wheel(s) 3 on the opposite sides (right and left with respect to the longitudinal axis) of the vehicle 2.

The vehicle service apparatus 8 may also preferably comprise calibration devices 11 for calibrating the ADAS components of the vehicle, for example at least one panel for radar calibration and/or a panel for calibrating cameras mechanically connected to the support structure 10.

The processing system 100 may comprise a processing and control unit 100a, which is preferably included in the vehicle service apparatus 8. The processing and control unit 100a may comprise, for example, a computational unit or electronic processor (Personal Computer or laptop or the like) and is configured to at least control and supervise the operation of the devices/apparatuses/units of the vehicle service system 1 during the implementation of the ADAS calibration method and/or of the method for determining the alignment of the vehicle 2.

In the embodiment shown in Figures 1, 2 and 3, the vehicle service system 1 preferably comprises four target devices 5.

It should be understood, however, that the present invention is not limited to the use of four target devices 5 but can also provide for the use of two target devices 5. The use of four target devices 5 may preferably be provided for implementing the method for determining the alignment of the wheels of the vehicle 2 and the ADAS calibration method; the use of two target devices 5 may be provided for implementing the ADAS calibration method.

With reference to Figures 1, 2 and 3, the target device 5 comprises a mechanical anchoring and support member 12, which is designed to be coupled in a stable but easily removable manner to the respective wheel 3 of the vehicle 2.

In the example shown in Figures 1 and 2, the mechanical anchoring and support member 12 comprises a hub or central tubular support body 13, and a series of lateral anchoring jaws or arms 14 which are stably connected to the central tubular support body 13 and are designed to be operated (manually) to anchor (with a "spider" mechanical grip) the mechanical anchoring member to the wheel 3 (tire and/or rim).

In use, when the mechanical anchoring and support member 12 is anchored to the wheel 3, the hub or central tubular support body 13 (which has a circular cross-section) is preferably arranged coaxial with the axis A of the wheel 3. It should be understood that the mechanical anchoring and support member 12 can be operated manually to be mounted on or disassembled from the wheel 3.

With reference to Figures 1, 2 and 3, the target device 5 further comprises a plate-like target body 15 (flat plate-like), which is coupled/pivoted to the mechanical anchoring and support member 12 so that it can be rotated at least partially around an axis B. Preferably, the axis B is horizontal. Preferably, the axis B is coaxial with the axis A.

In the illustrated example, the target device 5 comprises a rectilinear pin or rod 17 (having a circular cross-section) which is integrally connected to the plate-like target body 15 from which it extends/protrudes cantilevered, and is axially engaged in the hub or central tubular support body 13 of the mechanical anchoring and support member 12 so that it can rotate around the axis B. In the illustrated example, the plate-like target body 15 has an approximately rectangular shape. In the illustrated example, the plate-like target body 15 has two opposite rectangular flat faces and has a graphic target 6 on at least one of the faces.

The graphic target 6 may contain (encode), in the form of a graphic image, at least one indication of the wheel 3 on which the target device 5 is to be mounted. Preferably, the four target devices 5 may comprise respective different graphic targets 6, each containing a graphic indication of the respective wheel 3 on which they are to be mounted.

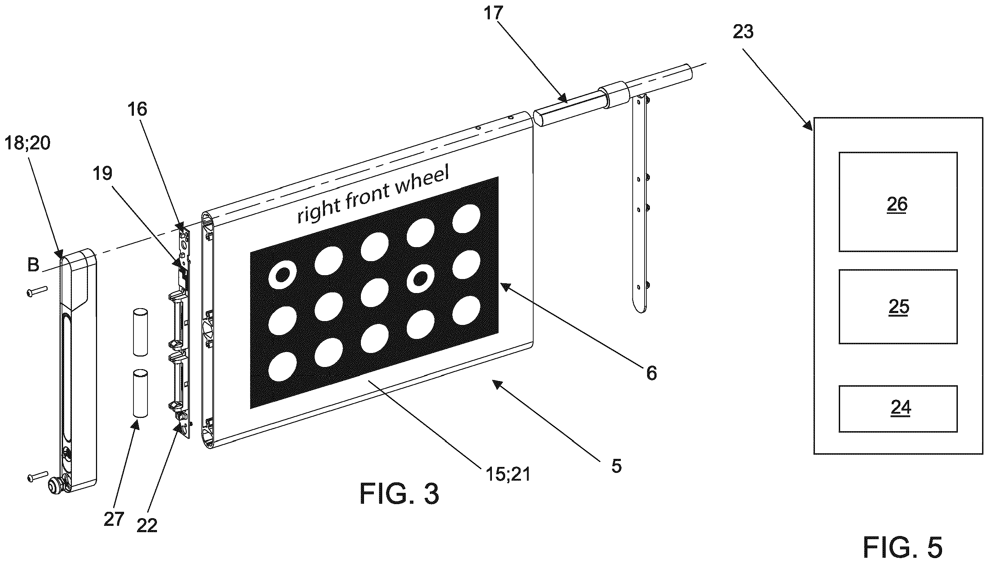

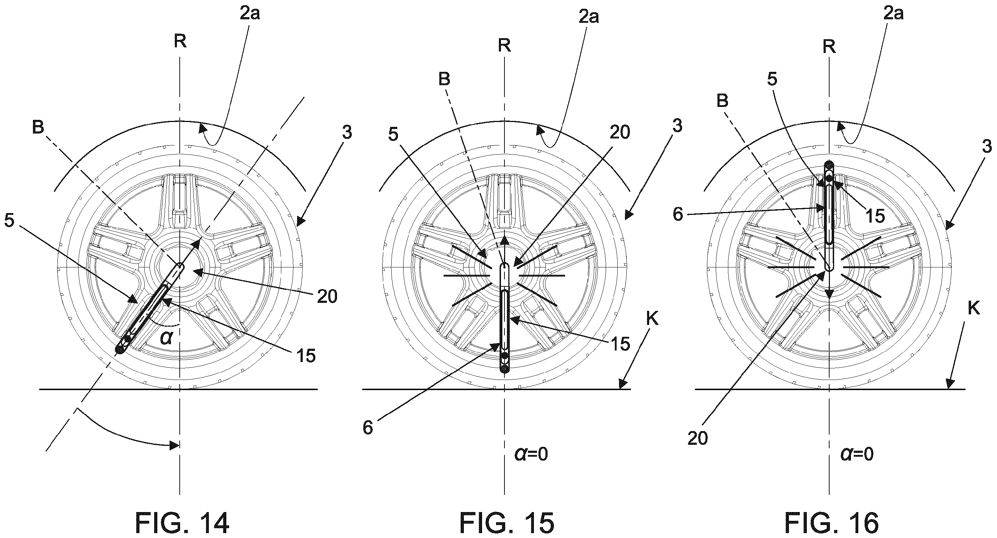

With reference to Figure 3, the target device 5 further comprises an electronic sensor device 16. According to the invention, the electronic sensor device 16 is integral with the plate-like target body 15 (or with its rod 17) so as to rotate with it around the axis B. The electronic sensor device 16 is configured so as to determine the angular position α of the plate-like target body 15 around the axis B (Figure 14). In other words, the electronic sensor device 16 is configured so as to determine the angle (the angular position α) of the plate-like target body 15 (i.e., of its lying plane) with respect to a reference axis R. The reference axis R preferably corresponds to a vertical axis (relative to the support surface K) and is perpendicular to the axis A of the wheel 3. The electronic sensor device 16 comprises an electronic measurement circuit designed to determine the angle α based on electrical signals supplied by one or more electronic intertial sensors. Electronic inertial sensors may comprise, for example, accelerometers with one or more axes (uniaxial, biaxial or triaxial) or similar sensors.

With reference to Figure 3, the target device 5 further comprises a user interface device 18 configured to communicate to an operator information associated with the angular position α determined by the electronic sensor device 16.

With reference to Figure 3, the target device 5 further comprises an electronic circuit or unit 19, which is configured so as to determine whether the angular position α determined by the electronic sensor device 16 of the target device 5 satisfies a predetermined target angular calibration condition (target alignment condition). Preferably, the electronic unit 19 is also configured to control the user interface device 18 to provide the operator with information in response to the determined angular position α. Preferably, the electronic unit 19 is also configured to control the user interface device 18 to provide the operator with information indicative of the achievement of the angular calibration condition. Preferably, the electronic unit 19 is also configured to control the user interface device 18 so as to guide the operator step by step in the angular adjustment/displacement of the plate-like target body 15 around the axis B so as to assist him/her in arranging it in an angular position satisfying the target angular calibration condition.

According to a preferred embodiment shown in the attached Figures, the target angular calibration condition is satisfied/achieved when the angle α between the lying plane of the plate-like target body 15 and the reference axis R is substantially zero/null (angle α=0) (Figure 15). In other words, according to a preferred embodiment, the target angular calibration condition is satisfied/achieved when the lying plane of the plate-like target body 15 is vertical and consequently the reference axis R lies in the same lying plane as the plate-like target body 15.

The Applicant has found that using the electronic sensor device 16 integrated in the target device 5 allows the angular position of the plate-like target body 15 to be automatically controlled in real time with very high accuracy. Tests carried out by the Applicant have shown that the angular measurement accuracy achieved is of the order of one tenth of a degree, i.e., a condition which satisfies the accuracy required in an ADAS calibration method and/or in a method for determining the alignment of the wheels.

The Applicant has also found that, by providing the operator step by step with indications on the detected angle and/or on the achievement of the target angular calibration condition through the user interface device 18, the operations are simplified and therefore the times required to carry out the angular calibration of the target devices 5 are shortened.

According to a preferred embodiment shown in the attached Figures, the user interface device 18 comprises a light signalling device 20. In the illustrated example, the light signalling device 20 may comprise one or more light sources, for example LEDs or OLEDs or similar sources.

In the example shown in Figure 3, the plate-like target body 15 comprises a plate-like rectangular box-shaped shell or casing 21. Preferably, the casing 21 can be made of polymeric materials (plastic materials) or the like. Preferably, the casing 21 of the target device 5 may have thereon at least one indication (for example printed and readable) by means of which the operator uniquely identifies the wheel 3 on which the target device 5 is to be installed (for example, the following can be printed: front left wheel).

The light signalling device 20 can be integrated in and/or coupled to the casing 21. Preferably, the light signalling device 20 can be advantageously arranged on one of the sides of the plate-like target body 15, preferably the outer side with the smallest length (vertical and opposite to the wheel 3 when mounted thereon) so as to be conveniently observed by the operator during the angular adjustment of the plate-like target body 15.

According to a preferred embodiment, the electronic unit 19 can be configured so as to control the light signalling device 20 to adjust the colour and/or modulate the intensity and/or vary the intermittent frequency of the light signal emitted based on the determined angular position α. The light signalling device 20 can generate, for example, a light signal having a first colour (for example, green), when the plate-like target body 15 is determined to be angularly arranged so as to satisfy the target angular calibration condition, and/or a light signal having a second colour (for example, red) when the plate-like target body 15 is determined not to satisfy the target angular calibration condition. According to a preferred embodiment, the electronic unit 19 can also control the light signalling device 20 in order to adjust/modulate the intermittent frequency of the light signal emitted according to the determined angular position so as to guide/assist the operator in angularly moving the plate-like target body 15 towards the calibration condition. For example, the intermittent frequency may decrease proportionally to the reduction of the angle α and become zero (continuous signal) at the angular position satisfying the angular calibration condition.

It should be understood that the present invention is not limited to a user interface device 18 comprising a light signalling device 20 but may alternatively or additionally provide other devices such as an acoustic signalling device, a monitor or display, or the like, contained in the target device 5. The signalling mode by means of the acoustic signalling device, the monitor or the display may be analogous or similar to that described above.

With reference to Figure 3, the target device 5 may further comprise a wireless communication unit 22 for communicating bidirectionally with the processing system 100 by means of a wireless communication system or network (Bluetooth, WiFi or the like - not shown). It should be understood that the processing system 100 is provided with wireless communication modules/circuits (not shown). Preferably, the target device 5 can communicate to the processing system 100 information indicative of the angular position α of the plate-like target body 15. Preferably, the electronic unit 19 can also be configured so as to communicate to the processing system 100 at least the following: information uniquely identifying the target device 5 that is communicating the information, and information indicating the achievement of the target angular calibration condition by the target device 5.

Preferably, the electronic unit 19 can be configured to receive from the processing system 100 via the wireless communication unit 22 a signal for activating the angular calibration of the target device 5. The electronic unit 19 of the target device 5 can be configured to control the user interface device 18 in response to the reception of the angular calibration activation signal, so as to signal to the operator that the angular calibration of the target device 5 can begin.

It should be added that the electronic unit 19 of the target device 5, by means of the electronic sensor device 16, may also be able to determine, in addition to the angle α, the orientation of the plate-like body 15 with respect to a reference system, in order to verify that the plate-like body 15 is oriented, for example, towards the support surface K (i.e., it is arranged below the rectilinear rod 17 (Figure 15), or in an opposite direction, i.e., towards the wheel arch 2a above the rectilinear rod 17 (Figure 16). In this way the electronic unit 19 of the target device 5 can also determine the achievement of the angular calibration condition based on the orientation of the plate-like body 15, wherein the orientation depends on the wheel 3 on which the target device 5 is installed. According to the example shown in Figures 1 and 2, the calibration condition of the target devices 5 mounted on the front wheels 3 can be satisfied when the target devices 5 lie in a vertical plane and have a downward orientation (towards the support surface K as in Figure 15), whereas the calibration condition of the target devices 5 mounted on the rear wheels 3 can be satisfied when the target devices 5 lie in a vertical plane and have an upward orientation (towards the wheel arch 2a as in Figure 16).

According to the preferred embodiment shown in Figure 3, the casing 21 can preferably house therein an electronic board (PCB) on which the following are assembled: the electronic sensor device 16, the electronic unit 19, the wireless communication unit 22, and a power supply device 27 (batteries) designed to supply the electrical power required for the operation of the target device 5.

According to the preferred embodiment shown in Figure 3, the light signalling device 20 can be arranged on an approximately rectangular rectilinear section bar which is stably engaged in an approximately rectangular side opening of the casing 21 so as to close it (vertical side).

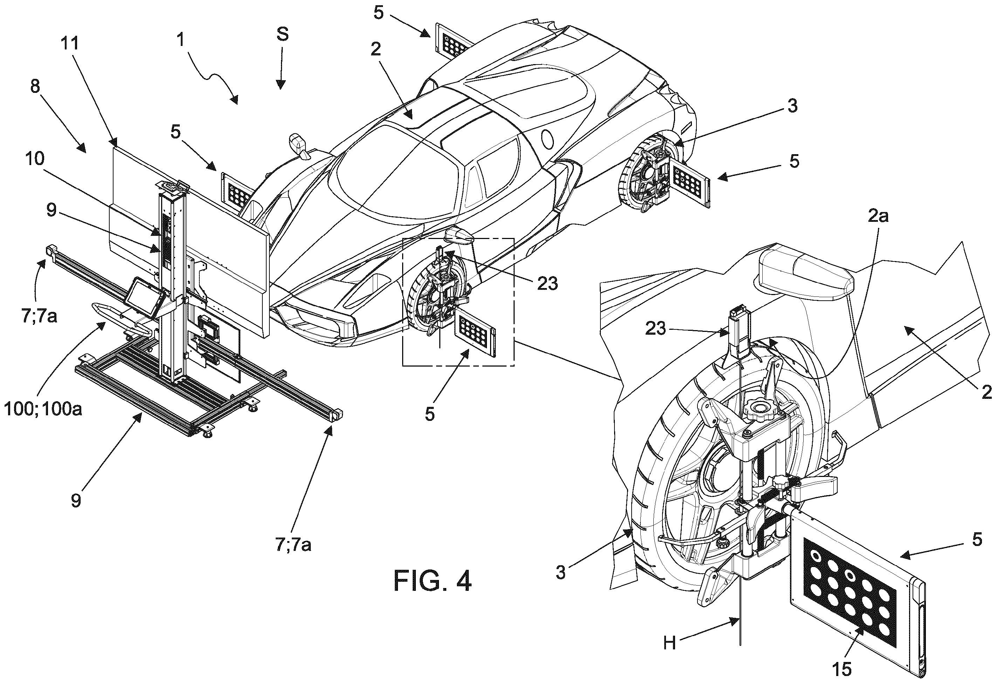

With reference to Figures 4 and 5, the vehicle service system 1 further comprises at least one electronic measuring device 23. The electronic measuring device 23 is preferably of the hand-held type, and is structured to be positioned manually by the operator on a wheel arch 2a of the vehicle to measure its height H with respect to a surface, preferably the support surface K. Preferably, the electronic measuring device 23 may comprise an outer casing which is suitable to be positioned on the wheel arch 2a at a predetermined measurement point (for example, the highest point with respect to the surface K) and contains an optoelectronic measurement head or module 24 designed to emit a laser beam towards the support surface K to measure the height H of the measurement point of the wheel arch with respect to the support surface K, a wireless communication module 25, and a processing and control module 26 which receives the height H measured by the optoelectronic measurement module 24 and communicates it via the wireless communication module 25 to the processing system 100.

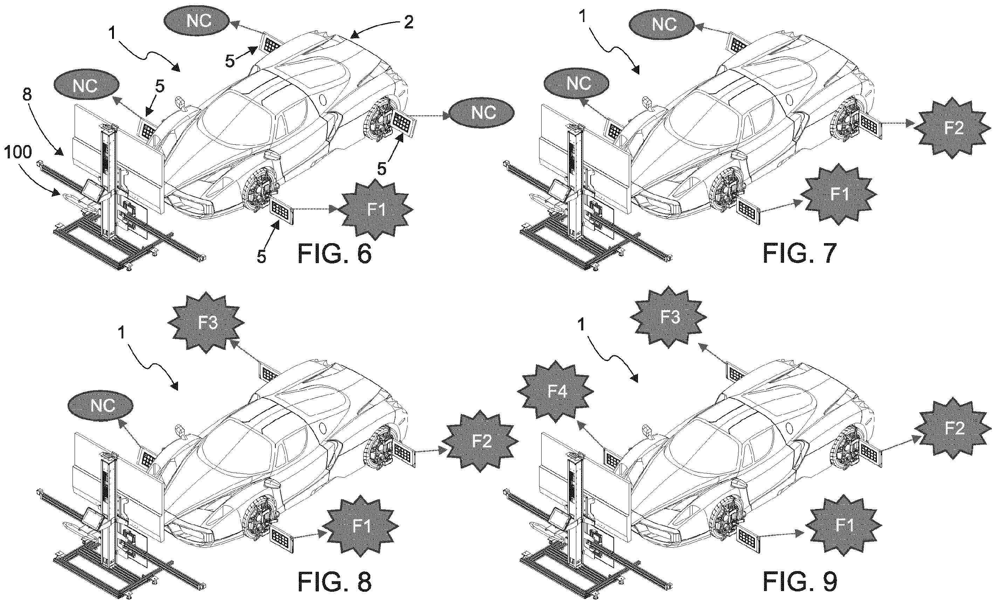

With reference to Figures 6-15, the method of operation of the vehicle service system 1 will be described below, wherein the following are assumed to be present: four target devices 5 provided with light signalling devices 20, a laser measuring device 23, and a vehicle service apparatus 8 arranged in front of the vehicle 2 at the service station S.

It is assumed that the operator has mounted the four target devices 5 on the respective wheels 3 of the vehicle 2 by means of the respective mechanical anchoring and support members 12. It is also assumed that the operator has switched on the target devices 5, for example by means of a switch (not shown) which can be present in the target devices 5. In this phase, the target devices 5 can remain in a waiting condition for an activation signal. In this phase, the light signalling devices 20 of the four target devices 5 can generate a first light signal indicative of a waiting condition for the start of the angular calibration. The first light signal could be, for example, a continuous red signal.

The activation signal can cause a change in the state of the light signal of one of the target devices 5 to indicate to the operator that the latter must be the first to be calibrated on the basis of a predetermined calibration ordered sequence. In this phase, for example, the light signal of the first target device 5 to be calibrated (the target device on the front left wheel in Figure 6) may temporarily change from a continuous light state to an intermittent light state (intermittent red signal) to attract the operator's attention. In this phase, the remaining target devices 5 can maintain their own signalling state (continuous red signal).

The intermittent light state can end automatically, for example after a predetermined time or as soon as an angular change in the plate-like target body 15 around the axis B is detected by the electronic sensor device 16, indicating the start of manual adjustment by the operator. During the manual rotation performed on the plate-like target body 15, the electronic sensor device 16 measures the angle α step by step and communicates it to the electronic unit 19 which determines whether or not the predetermined angular calibration condition has been reached. When the electronic unit 19 detects that the angular calibration condition has been reached (i.e., the plate-like target body is arranged in the vertical plane), it commands the light signalling device 20 to change the state. The change in the state may involve a change in the light signal from the first light signal to a second light signal different from the first one. The second light signal may comprise, for example, a continuous green signal (F1 in Figure 6) which signals to the operator that the angular calibration of the first target device 5 is correct and complete. In this phase, the remaining three target devices 5 can continue to maintain the first light signal (continuous red signal) unchanged, to signal that they have not yet been calibrated (NC in Figure 6).

Once the calibration condition has been reached (green light signal), the first target device 5 can communicate to the processing system 100 an electrical calibration confirmation signal indicating the completion of the angular calibration of the first target device 5.

The processing system 100, in response to the reception of the calibration confirmation signal from the first target device 5, can transmit the activation signal to the second target device 5 provided in the predetermined calibration ordered sequence. For example, in Figure 7, the activation signal is communicated to the target device 5 applied to the left rear wheel. In this phase, the activation signal causes a change in the state of the light signal of the second target device 5 to indicate to the operator that the latter must be the second to be calibrated on the basis of the calibration ordered sequence. In this phase, the light signal of the second target device 5 to be calibrated (the target device on the rear left wheel in Figure 7) may temporarily change from the continuous light state to the intermittent light state to attract the operator's attention. In this phase, the third and fourth target devices 5 to be calibrated maintain their own signalling state (NC in Figure 7) corresponding to the continuous red signal, and the first target device 5 maintains its own signalling state (F1 in Figure 7) corresponding to the green signal indicating that the angular calibration has been carried out.

The intermittent light state of the second target device 5 can end automatically, for example after a predetermined time or as soon as an angular change in the plate-like target body 15 around the axis B is detected by the electronic sensor device 16. When the electronic unit 19 detects that the angular calibration condition has been reached (vertical plate-like target body of the second target device 5), it commands the light signalling device 20 to change the state from the first signal to the second light signal different from the first. The second light signal may comprise, for example, a green light (F2 in Figure 7) which signals to the operator that the angular calibration of the second target device 5 is correct. Once the calibration condition has been reached (green light signal), the second target device 5 can communicate to the processing system 100 a calibration confirmation signal indicating the completion of the angular calibration of the second target device 5. The processing system 100, in response to the reception of the calibration confirmation signal from the second target device 5, can transmit the activation signal to the third target device 5 provided in the predetermined calibration ordered sequence. For example, in Figure 8, the activation signal is communicated to the target device 5 applied to the right rear wheel.

The operations described above are repeated in the same way according to the predetermined ordered sequence during the angular calibration of the third target device 5 (Figure 8) and the angular calibration of the fourth target device 5 (Figure 9). It should be understood that during these calibrations the third and fourth target devices 5 signal to the operator that the respective angular calibration conditions have been achieved by generating the light signals F3 (Figure 8) and F4 (Figure 9), respectively.

Once the angular calibration of the four target devices 5 has been completed, i.e., following the reception of the confirmation signal transmitted by the fourth target device 5, the processing system 100 communicates to the target devices 5 an angular calibration end signal. In response to the reception of the angular calibration end signal, the light signalling devices 20 of the target devices 5 can be controlled by the corresponding electronic units 19 to change their light state, for example from on to off.

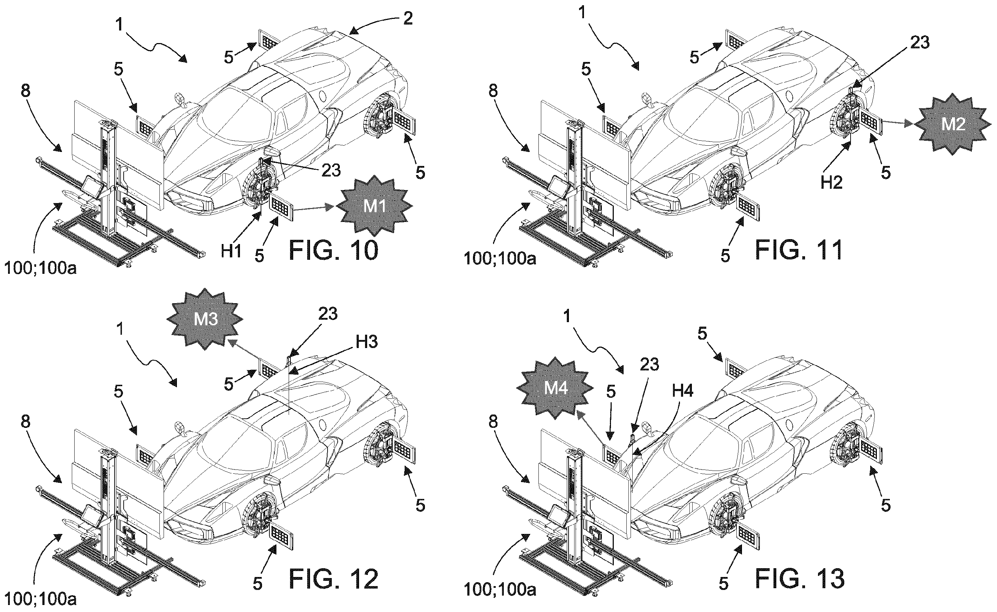

With reference to Figures 10 to 13, the processing system 100 can be configured to guide the operator through the target devices 5, in the operation of measuring the heights H of the wheel arches 2a in a predetermined sequential order.

With reference to Figure 10, the processing system 100 can transmit a wheel arch measurement activation signal to the first target device 5 arranged on the wheel 2 associated with the first wheel arch 2a to be measured. In response to the reception of the wheel arch measurement activation signal, the electronic unit 19 of the first target device 5 (Figure 10) can command a change in the state of the light signal emitted by the light signalling device 20 to indicate to the operator that the wheel arch 2a on which the height measurement is to be carried out is the one above the wheel 3 with which the first target device 5 is associated. In this phase, the light signalling device 20 can pass from a first state, for example off, to a second state, for example on (red light signal). The operator places the electronic measuring device 23 on the first wheel arch 2a and measures the height H1. The measured height H1 is communicated by the electronic measuring device 23 to the processing system 100 via its communication module 25. The processing system 100 receives the measured height H1 and stores it in a database (for example, in an internal memory) assigning it to/associating it with the first wheel arch 2a.

The processing system 100 can communicate a read confirmation signal to the first target device 5 to cause its light signalling device 20 to change its light state to signal to the operator that the reception and storage of the height has been completed by the processing system 100. For example, in this phase the light signal of the first target device 5 can change from red to green (M1 in Figure 10).

With reference to Figure 11, the processing system 100 can transmit a wheel arch measurement activation signal to the second target device 5 arranged on the wheel 2 associated with the second wheel arch 2a to be measured. In response to the reception of the wheel arch measurement activation signal, the electronic unit 19 of the second target device 5 (Figure 11) can command a change in the state of the light signal emitted by the light signalling device 20 to indicate to the operator that the wheel arch 2a on which the height measurement is to be carried out is the one above the wheel 3 with which the second target device 5 is associated. In this phase, the light signalling device 20 can pass from a first state, for example off, to a second state, for example on (for example, red light signal). The operator places the electronic measuring device 23 on the second wheel arch 2a and measures the height H2. The measured height H2 is communicated by the electronic measuring device 23 to the processing system 100. The processing system 100 receives the measured height H2 and stores it in a database, assigning it to/associating it with the second wheel arch 2a.

The processing system 100 can communicate a read confirmation signal to the second target device 5 and its light signalling device 20 can change its light state to signal to the operator that the processing system 100 has completed the operation of storing the measured height H2 of the second wheel arch 2a. For example, in this phase the light signal state of the second target device 5 can change from red to green (M2 in Figure 11).

The operations described above are repeated in the same way according to the predetermined ordered sequence during the measurement of the height H3 of the third wheel arch 2a, and of the height H4 of the fourth wheel arch 2a. In these phases, the light signalling devices 20 of the third and fourth target devices 5 signal to the operator the completion of the acquisition of the measured heights H3 and H4, thereby causing a change in the state of the light signal of the third target device 5 (M3 in Figure 12) and of the fourth target device 5 (M4 in Figure 13).

It should be pointed out that the processing system 100 can also communicate the stored heights H3 and H4 of the third and fourth wheel arches 2a to the central unit of the vehicle (not shown) which in turn processes them on the basis of the service performed by the vehicle service system 1.

A technical effect of the method described above is to assist the operator in measuring the wheel arch heights in the correct sequence, thus reducing execution times and eliminating errors. Moreover, the ordered measurement sequence and the automatic transmission of the heights by the measuring device eliminates the need for the operator to manually enter the heights detected in the processing system 100.

The above-described service system has the advantage of increasing the accuracy of the manual angular calibration of the target devices and of reducing the execution time thereof.

The above-described service system has also the advantage of reducing the time required to carry out measurements of the wheel arch heights and of carrying out an automatic storage thereof.

Lastly, it is clear that modifications and variations may be made to the above-described system and method without however departing from the scope of the present claims.

## Claims

1. A target device (5) comprising:
a mechanical anchoring and support member (12), which is designed to be coupled in a stable but easily removable manner to a respective wheel (3) of the vehicle (2),
a plate-like target body (15), which is coupled to said mechanical anchoring and support member (12) in order to be rotated at least partially around a substantially horizontal axis (B) and has said graphic target (6) on at least one face,
an electronic sensor device (16) which is integral with said plate-like target body (15) in order to rotate with it around said axis (B), and is configured in order to determine the angular position (α) of said plate-like target body (15) around said axis (B), said electronic sensor device (16) comprises an electronic measurement circuit configured to determine said angular position (α) based on electrical signals supplied by one or more electronic inertial sensors,
a user interface device (18) configured to communicate to an operator information associated with said determined angular position (α).

2. A vehicle service system (1) provided with target devices (5) which are mounted on respective wheels (3) of a vehicle (2) and are provided with graphic targets (6), where each of the target devices (5) corresponds to the target device of claim 1.

3. The vehicle service system according to claim 2, comprising an electronic unit (19) which is configured in order to determine whether said angular position (α) determined by the electronic sensor device (16) satisfies a predetermined angular calibration condition.

4. The vehicle service system according to claim 2 or 3, wherein said electronic unit (19) is configured in order to control said user interface device (18) to indicate to the operator that said angular position (α) satisfies said predetermined angular calibration condition or that said angular position (α) does not satisfy said predetermined angular calibration condition.

5. The vehicle service system according to claims 2 and 3, or 4, wherein said electronic unit (19) is configured in order to process said angular position (α) to control said user interface device (18) to provide the operator with information to guide the angular displacement of the plate-like target body (15) into the predetermined angular calibration condition.

6. The vehicle service system according to any one of claims from 3 to 5, wherein said predetermined angular calibration condition is satisfied when said plate-like target body (15) lies in a vertical plane.

7. The vehicle service system according to any one of the foregoing claims 2 to 6, wherein said user interface device (18) comprises a light signalling device (20) and/or an acoustic signalling device and/or a display.

8. The vehicle service system according to any one of the foregoing claims 2-7, wherein said target device (5) further comprises a wireless communication unit (22) for communicating with a processing system (100) so as to provide the latter with information indicative of said angular position (α) and/or of the achievement of the predetermined angular calibration condition by said target device (5).

9. The vehicle service system according to any one of claims from 3 to 8, comprising a hand-held electronic measuring device (23) configured to allow the operator to selectively measure the heights of the wheel arches (2a) of the vehicle (2), said processing system (100) is configured to control the target devices (5) in such a way as to indicate to the operator, through said user interface devices (18), the wheel arch (2a) on which to perform said height measurement.

10. The vehicle service system according to claim 9, wherein said electronic measuring device (23) is provided with a wireless communication module (25) to communicate the measured height to said processing system (100).

11. The vehicle service system according to claim 10, wherein said processing system (100) is configured to selectively control the target devices (5) in order to indicate to the operator, through said user interface devices (18), the completion of the measurement of the height (H) of said wheel arch (2a).

12. The vehicle service system according to any one of the preceding claims 2 to 11, comprising an image acquisition system (7) which is designed to acquire the target images of the graphic targets (6) of the target devices (5) mounted on the wheels (3).

13. The vehicle service system according to claim 12, comprising a processing system (100) configured to process said target images to determine the wheel alignment (3) of said vehicle (2).

14. The vehicle service system according to claim 12, comprising a processing system (100) configured to process said target images to determine the position of said vehicle (2) with respect to a reference system.

15. The vehicle service system according to claim 14, wherein said processing system (100) is configured in order to implement an ADAS calibration method of the ADAS system of said vehicle (2).

16. A method of operation of a vehicle service system (1) comprising: target devices (5) which are mounted on respective wheels (3) of the vehicle (2) and are provided with graphic targets (6), an image acquisition system (7) which is designed to acquire the target images of the graphic targets (6) of the target devices (5) mounted on the wheels (3), a processing system (100) configured in order to process said target images to determine preliminary information and implement a method for determining the wheel alignment and/or an ADAS calibration method using said preliminary information,
the target devices (5) comprise: a mechanical anchoring and support member (12), which is designed to be coupled in a stable but easily removable manner to a respective wheel (3) of the vehicle (2), a plate-like target body (15), which is coupled to said mechanical anchoring and support member (12) in order to be rotated at least partially around a substantially horizontal axis (B) and has said graphic target (6) on at least one face, said method comprises the steps of: determining the angular position (α) of said plate-like target body (15) around said axis (B) by means of an electronic sensor device (16) which is integral with said plate-like target body (15) in order to rotate with it around said axis (B) and comprises an electronic measurement circuit configured to determine said angular position (α) based on electrical signals supplied by one or more electronic inertial sensors, and communicating to an operator information associated with said angular position (α) determined by means of a user interface device (18).

## Patentansprüche

1. Zielvorrichtung (5), aufweisend:
ein mechanisches Verankerungs- und Stützelement (12), das so ausgelegt ist, dass es stabil, aber leicht lösbar mit einem entsprechenden Rad (3) des Fahrzeugs (2) gekoppelt werden kann,
einen plattenförmigen Zielkörper (15), der mit dem mechanischen Verankerungs- und Stützelement (12) gekoppelt ist, um mindestens teilweise um eine im Wesentlichen horizontale Achse (B) gedreht zu werden, und das grafische Ziel (6) auf mindestens einer Seite aufweist,
eine elektronische Sensorvorrichtung (16), die mit dem plattenförmigen Zielkörper (15) integriert ist, um sich mit diesem um die Achse (B) zu drehen, und die so konfiguriert ist, dass sie die Winkelposition (α) des plattenförmigen Zielkörpers (15) um die Achse (B) bestimmt, wobei die elektronische Sensorvorrichtung (16) eine elektronische Messschaltung umfasst, die so konfiguriert ist, dass sie die Winkelposition (α) anhand von elektrischen Signalen bestimmt, die von einem oder mehreren elektronischen Inertialsensoren geliefert werden,
eine Benutzerschnittstellenvorrichtung (18), die so konfiguriert ist, dass sie einem Bediener Informationen übermittelt, die der bestimmten Winkelposition (α) zugeordnet sind.

2. Fahrzeugservicesystem (1), das mit Zielvorrichtungen (5) bereitgestellt ist, die an jeweiligen Rädern (3) eines Fahrzeugs (2) montiert sind und mit grafischen Zielen (6) bereitgestellt sind, wobei jede der Zielvorrichtungen (5) der Zielvorrichtung nach Anspruch 1 entspricht.

3. Fahrzeugservicesystem nach Anspruch 2,
umfassend eine elektronische Einheit (19), die so konfiguriert ist, dass sie bestimmt, ob die Winkelposition (α), die von der elektronischen Sensorvorrichtung (16) bestimmt wurde, eine vorgegebene Winkelkalibrierungsbedingung erfüllt.

4. Fahrzeugservicesystem nach Anspruch 2 oder 3,
wobei die elektronische Einheit (19) so konfiguriert ist, dass sie die Benutzerschnittstellenvorrichtung (18) so steuert, dass sie dem Bediener anzeigt, dass die Winkelposition (α) die vorgegebene Winkelkalibrierungsbedingung erfüllt oder dass die Winkelposition (α) die vorgegebene Winkelkalibrierungsbedingung nicht erfüllt.

5. Fahrzeugservicesystem nach Anspruch 2 und 3 oder 4,
wobei die elektronische Einheit (19) so konfiguriert ist, dass sie die Winkelposition (α) verarbeitet, um die Benutzerschnittstellenvorrichtung (18) zu steuern und dem Bediener Informationen bereitzustellen, um die Winkelverschiebung des plattenförmigen Zielkörpers (15) in die vorgegebene Winkelkalibrierungsbedingung zu führen.

6. Fahrzeugservicesystem nach einem der Ansprüche 3 bis 5, wobei die vorgegebene Winkelkalibrierungsbedingung erfüllt ist, wenn der plattenförmige Zielkörper (15) in einer vertikalen Ebene liegt.

7. Fahrzeugservicesystem nach einem der vorstehenden Ansprüche 2 bis 6,
wobei die Benutzerschnittstellenvorrichtung (18) eine Lichtsignalvorrichtung (20) und/oder eine akustische Signalvorrichtung und/oder eine Anzeige umfasst.

8. Fahrzeugservicesystem nach einem der vorstehenden Ansprüche 2 bis 7,
wobei die Zielvorrichtung (5) ferner eine Drahtloskommunikationseinheit (22) zum Kommunizieren mit einem Verarbeitungssystem (100) umfasst, um letzterem Informationen bereitzustellen, die die Winkelposition (α) und/oder das Erreichen der vorgegebenen Winkelkalibrierungsbedingung durch die Zielvorrichtung (5) anzeigen.

9. Fahrzeugservicesystem nach einem der Ansprüche 3 bis 8, aufweisend eine tragbare elektronische Messvorrichtung (23), die so konfiguriert ist, dass sie dem Bediener ermöglicht, die Höhen der Radkästen (2a) des Fahrzeugs (2) selektiv zu messen, wobei das Verarbeitungssystem (100) so konfiguriert ist, dass es die Zielvorrichtungen (5) so steuert, dass es dem Bediener über die Benutzerschnittstellenvorrichtungen (18) anzeigt, an welchem Radkasten (2a) die Höhenmessung durchgeführt werden soll.

10. Fahrzeugservicesystem nach Anspruch 9,
wobei die elektronische Messvorrichtung (23) mit einem Drahtloskommunikationsmodul (25) bereitgestellt ist, um die gemessene Höhe an das Verarbeitungssystem (100) zu kommunizieren.

11. Fahrzeugservicesystem nach Anspruch 10,
wobei das Verarbeitungssystem (100) so konfiguriert ist, dass es die Zielvorrichtungen (5) selektiv steuert, um dem Bediener über die Benutzerschnittstellenvorrichtungen (18) den Abschluss der Messung der Höhe (H) des Radkastens (2a) anzuzeigen.

12. Fahrzeugservicesystem nach einem der vorhergehenden Ansprüche 2 bis 11,
aufweisend ein Bildaufnahmesystem (7), das so ausgelegt ist, dass es die Zielbilder der grafischen Ziele (6) der Zielvorrichtungen (5) aufnimmt, die an den Rädern (3) montiert sind.

13. Fahrzeugservicesystem nach Anspruch 12,
aufweisend ein Verarbeitungssystem (100), das so konfiguriert ist, dass es die Zielbilder verarbeitet, um die Achsvermessung (3) des Fahrzeugs (2) zu bestimmen.

14. Fahrzeugservicesystem nach Anspruch 12,
umfassend ein Verarbeitungssystem (100), das so konfiguriert ist, dass es die Zielbilder verarbeitet, um die Position des Fahrzeugs (2) in Bezug auf ein Referenzsystem zu bestimmen.

15. Fahrzeugservicesystem nach Anspruch 14,
wobei das Verarbeitungssystem (100) so konfiguriert ist, dass es ein ADAS-Kalibrierverfahren des ADAS-Systems des Fahrzeugs (2) implementiert.

16. Betriebsverfahren eines Fahrzeugservicesystems (1), umfassend:
Zielvorrichtungen (5), die an jeweiligen Rädern (3) des Fahrzeugs (2) montiert und mit grafischen Zielen (6) bereitgestellt sind, ein Bildaufnahmesystem (7), das so ausgelegt ist, dass es die Zielbilder der grafischen Ziele (6) der Zielvorrichtungen (5) aufnimmt, die an den Rädern (3) montiert sind, ein Verarbeitungssystem (100), das so konfiguriert ist, dass es die Zielbilder verarbeitet, um Vorabinformationen zu bestimmen und ein Verfahren zum Bestimmen der Achsvermessung und/oder ein ADAS-Kalibrierverfahren unter Verwendung der Vorabinformationen zu implementieren,
wobei die Zielvorrichtungen (5) aufweisen: ein mechanisches Verankerungs- und Stützelement (12), das so ausgelegt ist, dass es stabil, aber leicht lösbar an ein entsprechendes Rad (3) des Fahrzeugs (2) gekoppelt werden kann, einen plattenförmigen Zielkörper (15), der mit dem mechanischen Verankerungs- und Stützelement (12) gekoppelt ist, um mindestens teilweise um eine im Wesentlichen horizontale Achse (B) gedreht zu werden, und der das grafische Ziel (6) auf mindestens einer Seite aufweist, wobei das Verfahren die folgenden Schritte umfasst: Bestimmen von der Winkelposition (α) des plattenförmigen Zielkörpers (15) um die Achse (B) mittels einer elektronischen Sensorvorrichtung (16), die mit dem plattenförmigen Zielkörper (15) integriert ist, um sich mit diesem um die Achse (B) zu drehen, und eine elektronische Messschaltung umfasst, die so konfiguriert ist, dass sie die Winkelposition (α) anhand von elektrischen Signalen bestimmt, die von einem oder mehreren elektronischen Inertialsensoren geliefert werden, und Kommunizieren von Informationen, die der bestimmten Winkelposition (α) zugeordnet sind, an einen Bediener mittels einer Benutzerschnittstellenvorrichtung (18).

## Revendications

1. Dispositif cible (5) comprenant :
un élément d'ancrage et de support mécanique (12), qui est conçu pour être couplé d'une manière stable mais facilement amovible à une roue (3) respective du véhicule (2),
un corps cible en forme de plaque (15), qui est couplé audit élément d'ancrage et de support mécanique (12) afin d'être tourné au moins partiellement autour d'un axe sensiblement horizontal (B) et qui comporte ladite cible graphique (6) sur au moins une face,
un dispositif capteur électronique (16) qui est d'un seul tenant avec ledit corps cible en forme de plaque (15) afin de tourner avec celui-ci autour dudit axe (B), et est configuré pour déterminer la position angulaire (α) dudit corps cible en forme de plaque (15) autour dudit axe (B), ledit dispositif capteur électronique (16) comprenant un circuit de mesure électronique configuré pour déterminer ladite position angulaire (α) sur la base de signaux électriques fournis par un ou plusieurs capteurs inertiels électroniques,
un dispositif interface utilisateur (18) configuré pour communiquer, à un opérateur, des informations associées à ladite position angulaire (α) déterminée.

2. Système d'entretien de véhicule (1) pourvu de dispositifs cibles (5) qui sont montés sur des roues (3) respectives d'un véhicule (2) et sont pourvus de cibles graphiques (6), chacun des dispositifs cibles (5) correspondant au dispositif cible selon la revendication 1.

3. Système d'entretien de véhicule selon la revendication 2,
comprenant une unité électronique (19) qui est configurée pour déterminer si ladite position angulaire (α) déterminée par le dispositif capteur électronique (16) remplit ou non une condition d'étalonnage angulaire prédéterminée.

4. Système d'entretien de véhicule selon la revendication 2 ou 3,
dans lequel ladite unité électronique (19) est configurée pour commander ledit dispositif interface utilisateur (18) pour indiquer à l'opérateur que ladite position angulaire (α) remplit ladite condition d'étalonnage angulaire prédéterminée ou que ladite position angulaire (α) ne remplit pas ladite condition d'étalonnage angulaire prédéterminée.

5. Système d'entretien de véhicule selon les revendications 2 et 3 ou 4,
dans lequel ladite unité électronique (19) est configurée pour traiter ladite position angulaire (α) pour commander ledit dispositif interface utilisateur (18) pour fournir à l'opérateur des informations pour guider le déplacement angulaire du corps cible en forme de plaque (15) dans la condition d'étalonnage angulaire prédéterminée.

6. Système d'entretien de véhicule selon l'une quelconque des revendications 3 à 5, dans lequel ladite condition d'étalonnage angulaire prédéterminée est remplie lorsque ledit corps cible en forme de plaque (15) se trouve dans un plan vertical.

7. Système d'entretien de véhicule selon l'une quelconque des revendications 2 à 6,
dans lequel ledit dispositif interface utilisateur (18) comprend un dispositif de signalisation lumineux (20) et/ou un dispositif de signalisation acoustique et/ou un dispositif d'affichage.

8. Système d'entretien de véhicule selon l'une quelconque des revendications 2 à 7,
dans lequel ledit dispositif cible (5) comprend en outre une unité de communication sans fil (22) pour communiquer avec un système de traitement (100) de manière à lui fournir des informations indicatives de ladite position angulaire (α) et/ou du fait que ledit dispositif cible (5) remplit la condition d'étalonnage angulaire prédéterminée.

9. Système d'entretien de véhicule selon l'une quelconque des revendications 3 à 8, comprenant un dispositif de mesure électronique portatif (23) configuré pour permettre à l'opérateur de mesurer sélectivement les hauteurs des passages de roues (2a) du véhicule (2), ledit système de traitement (100) étant configuré pour commander les dispositifs cibles (5) de manière à indiquer à l'opérateur, par l'intermédiaire desdits dispositifs interface utilisateur (18), le passage de roue (2a) sur lequel réaliser ladite mesure de hauteur.

10. Système d'entretien de véhicule selon la revendication 9,
dans lequel ledit dispositif de mesure électronique (23) est pourvu d'un module de communication sans fil (25) pour communiquer la hauteur mesurée audit système de traitement (100).

11. Système d'entretien de véhicule selon la revendication 10,
dans lequel ledit système de traitement (100) est configuré pour commander sélectivement les dispositifs cibles (5) afin d'indiquer à l'opérateur, par l'intermédiaire desdits dispositifs interface utilisateur (18), l'achèvement de la mesure de la hauteur (H) dudit passage de roue (2a).

12. Système d'entretien de véhicule selon l'une quelconque des revendications 2 à 11,
comprenant un système d'acquisition d'images (7) qui est conçu pour acquérir les images de cibles des cibles graphiques (6) des dispositifs cibles (5) montés sur les roues (3).

13. Système d'entretien de véhicule selon la revendication 12,
comprenant un système de traitement (100) configuré pour traiter lesdites images de cibles pour déterminer l'alignement de roues (3) dudit véhicule (2).

14. Système d'entretien de véhicule selon la revendication 12,
comprenant un système de traitement (100) configuré pour traiter lesdites images de cibles pour déterminer la position dudit véhicule (2) par rapport à un système de référence.

15. Système d'entretien de véhicule selon la revendication 14,
dans lequel ledit système de traitement (100) est configuré pour mettre en œuvre une méthode d'étalonnage ADAS du système ADAS dudit véhicule (2).

16. Méthode de fonctionnement d'un système d'entretien de véhicule (1) comprenant : des dispositifs cibles (5) qui sont montés sur des roues (3) respectives du véhicule (2) et qui sont pourvus de cibles graphiques (6), un système d'acquisition d'images (7) qui est conçu pour acquérir les images de cibles des cibles graphiques (6) des dispositifs cibles (5) montés sur les roues (3), un système de traitement (100) configuré pour traiter lesdites images de cibles pour déterminer des informations préliminaires et mettre en œuvre une méthode de détermination de l'alignement de roues et/ou une méthode d'étalonnage ADAS à l'aide desdites informations préliminaires,
les dispositifs cibles (5) comprennent : un élément d'ancrage et de support mécanique (12), qui est conçu pour être couplé d'une manière stable mais facilement amovible à une roue (3) respective du véhicule (2), un corps cible en forme de plaque (15), qui est couplé audit élément d'ancrage et de support mécanique (12) afin d'être tourné au moins partiellement autour d'un axe sensiblement horizontal (B) et qui comporte ladite cible graphique (6) sur au moins une face, ladite méthode comprenant les étapes suivantes : la détermination de la position angulaire (α) dudit corps cible en forme de plaque (15) autour dudit axe (B) au moyen d'un dispositif capteur électronique (16) qui est d'un seul tenant avec le corps cible en forme de plaque (15) afin de tourner avec celui-ci autour dudit axe (B) et qui comprend un circuit de mesure électronique configuré pour déterminer ladite position angulaire (α) sur la base de signaux électriques fournis par un ou plusieurs capteurs inertiels électroniques, et la communication, à un opérateur, d'informations associées à ladite position angulaire (α) déterminée au moyen d'un dispositif interface utilisateur (18).
